# EUROPEAN PATENT APPLICATION

(11) **EP 1 475 976 A1**
(43) Date of publication of application: **10.11.2004**
(21) Application number: 03252931.5
(22) Date of filing: 12.05.2003
(51) Int. Cl.: H04Q 7/32, H04L 12/56

(54) **Apparatus and method of handling UTRAN radio resource control connecting messages in UMTS user equipment**

(30) Priority: 08.05.2003 US 434022; 08.05.2003 CA 2428236
(71) Applicant: M-Stack Limited, Birmingham B1 2RX (GB)
(72) Inventor: Pedlar, David W., Solihull, West Midlands B91 3FB (GB); Funnell, Nicola M., Coleshill, Warwickshire B46 1BH (GB); Harrison, Robert J., Hollywood, Birmingham B47 5QG (GB)
(74) Representative: Hibbert, Juliet Jane Grace

(57) **Abstract**

The details of an apparatus and method of handling universal terrestrial radio access network radio resource control connecting messages in universal mobile telecommunications system user equipment are disclosed herein. According to one aspect of the present application, there is provided a user equipment apparatus adapted to receive messages from a UTRAN including a state machine having a Connecting state whereat a connecting command is handled by transitioning to an unambiguous state upon exchange of the connecting command. According to another aspect of the present application, there is provided a method of handling an unsolicited command sent from a UTRAN including the steps of: determining if the user equipment is in a transitional state trying to establish a connection with the UTRAN; and if so determined, transitioning from the transitional state to an unambiguous state.

## Description

### CROSSREFERENCE TO RELATED APPLICATION

N/A

### BACKGROUND

### TECHNICAL FIELD

This application relates to UMTS (Universal Mobile Telecommunications System) in general, and to an apparatus and method of handling universal terrestrial radio access network radio resource control connecting messages in universal mobile telecommunications system user equipment in particular.

### DESCRIPTION OF THE RELATED ART

UMTS is a third generation public land mobile telecommunication system. Various standardization bodies are known to publish and set standards for UMTS, each in their respective areas of competence. For instance, the 3GPP (Third Generation Partnership Project) has been known to publish and set standards for GSM (Global System for Mobile Communications) based UMTS, whereas and the 3GPP2 (Third Generation Partnership Project 2) has been known to publish and set standards for CDMA (Code Division Multiple Access) based UMTS. Within the scope of a particular standardization body, specific partners publish and set standards in their respective areas.

Standard document ETSI TS 125 331 v3.10.0 (2002-03) addresses the subject of UMTS RRC (Radio Resource Control) protocol requirements between UTRAN (Universal Terrestrial Radio Access Network) and UE (User Equipment). Although ETSI TS 125 331 describes how the UE should behave when establishing an RRC connection with the UTRAN, the document may not address how the UE should behave when receiving an unsolicited RRC connection release in particular.

Consider a wireless mobile device (UE) that complies with the ETSI specifications for the UMTS protocol. The ETSI specification for the RRC layer of the UE ETSI TS 125 331 states in section 8.1.3 how the UE should behave when establishing an RRC connection with the UTRAN.

The specification also states in section 9.3a how the UE should behave when it receives certain messages from the UTRAN in circumstances not specified elsewhere.

However, there is a scenario which may arise during connection establishment in which a message which is not covered by section 9.3a can be received and for which there is no specified behaviour. In this scenario the UE behaviour is ambiguous.

### SUMMARY

According to one aspect of the present application, there is provided a user equipment apparatus adapted to exchange messages with a UTRAN, select messages having a command, select commands including RRC CONNECTION REQUEST, RRC CONNECTION SETUP, RRC CONNECTION REJECT, and RRC CONNECTION RELEASE, the apparatus comprising a connecting state machine transitioning from one state to another upon exchange of the select commands, the connecting state machine comprising: an Idle state whereat the user equipment remains before transmitting an RRC CONNECTION REQUEST; a Connected state whereat the user equipment remains upon reception of one of RRC CONNECTION REJECT and RRC CONNECTION SETUP, and whereat the state transitions to said Idle state upon one of the reception of RRC CONNECTION RELEASE, an error at the user equipment, and other events which cause a transition to said Idle state ; and a Connecting state whereat a connecting command is handled by the state machine while the state machine is transitioning between said Idle state and said Connected state, said Connecting state transitioning to an unambiguous state upon exchange of the connecting command..

According to another aspect of the present application, there is provided a method of handling an unsolicited command at a user equipment, the unsolicited command sent from a UTRAN, the method comprising the steps of: (a) receiving the unsolicited command; (b) determining if the user equipment is in a transitional state trying to establish a connection with the UTRAN; and (c) if so determined, transitioning from the transitional state to an unambiguous state upon reception of the unsolicited command, thereby enabling the user equipment to handle the unsolicited command.

According to yet another aspect of the present application, there is provided a method of handling an RRC CONNECTION RELEASE message received at a user equipment, the message sent from a UTRAN, the method comprising the steps of: (a) determining if no procedure is ongoing at the user equipment which expects the RRC CONNECTION RELEASE message to be received; and (b) if so determined, ignoring the received message.

According to still another aspect of the present application, there is provided a method of handling a message received at a user equipment, the message sent from a UTRAN, the method comprising the steps of: (a) determining if no procedure is ongoing at the user equipment which expects the message to be received; (b) determining if the message is of an unsolicited type, the unsolicited types including RRC CONNECTION RELEASE; and (c) if the determinations in steps (a) and (b) are both affirmative, ignoring the received message.

Other aspects and features of the present application will become apparent to those ordinarily skilled in the art upon review of the following description of specific embodiments of an apparatus and method of handling universal terrestrial radio access network radio resource control connecting messages in universal mobile telecommunications system user equipment in conjunction with the accompanying figures.

### BRIEF DESCRIPTION OF THE DRAWINGS

Embodiments of the present application will now be described, by way of example only, with reference to the attached figures, wherein:
FIG. 1 is a block diagram illustrating an embodiment of a protocol stack apparatus provided with a connecting RRC block, in accordance with the present application;
FIG. 2 is a block diagram illustrating in greater detail the Connecting RRC block of FIG. 1;
FIG. 3 illustrates a preferred RRC Connecting state machine diagram, provided in accordance with the present application;
FIG. 4 is an interaction diagram illustrating RRC Connection handling, in accordance with the present application; and
FIG. 5 is a block diagram illustrating a mobile device, which can act as a UE and co-operate with the apparatus and methods of FIGs. 1 to 4.

Same reference numerals are used in different figures to denote similar elements.

### DETAILED DESCRIPTION OF THE DRAWINGS

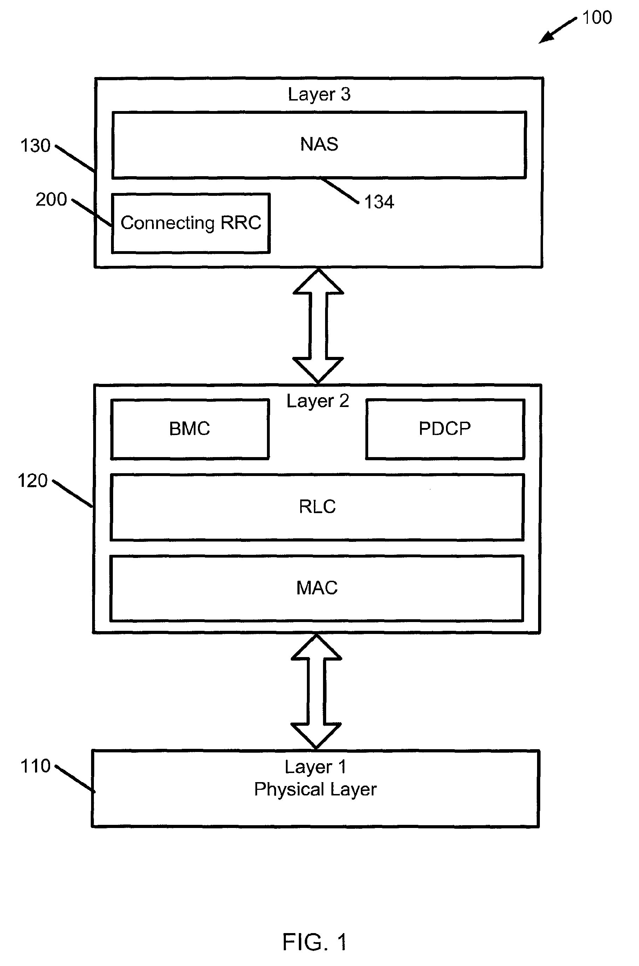

Referring to the drawings, FIG. 1 is a block diagram illustrating an embodiment of a protocol stack apparatus provided with a connecting RRC block, in accordance with the present application.

The CONNECTING RRC block 200 is a sub layer of radio interface Layer 3 130 of a UMTS protocol stack 100. The CONNECTING RRC 200 exists in the control plane only and provides information transfer service to the non-access stratum NAS 134. The CONNECTING RRC 200 is responsible for controlling the configuration of radio interface Layer 1 110 and Layer 2 120. When the UTRAN wishes to change the UE configuration it will issue a message to the UE containing a command to invoke a specific RRC procedure. The CONNECTING RRC 200 layer of the UE decodes this message and initiates the appropriate RRC procedure. Generally when the procedure has been completed (either successfully or not) then the CONNECTING RRC sends a response message to the UTRAN (via the lower layers) informing the UTRAN of the outcome. Although it should be noted that there are a few scenarios where the CONNECTING RRC will not issue a response message to the UTRAN, in those cases the CONNECTING RRC need not and does not reply.

Advantageously, the CONNECTING RRC block 200 allows the protocol stack 100 to behave unambiguously with respect to unsolicited connection release messages.

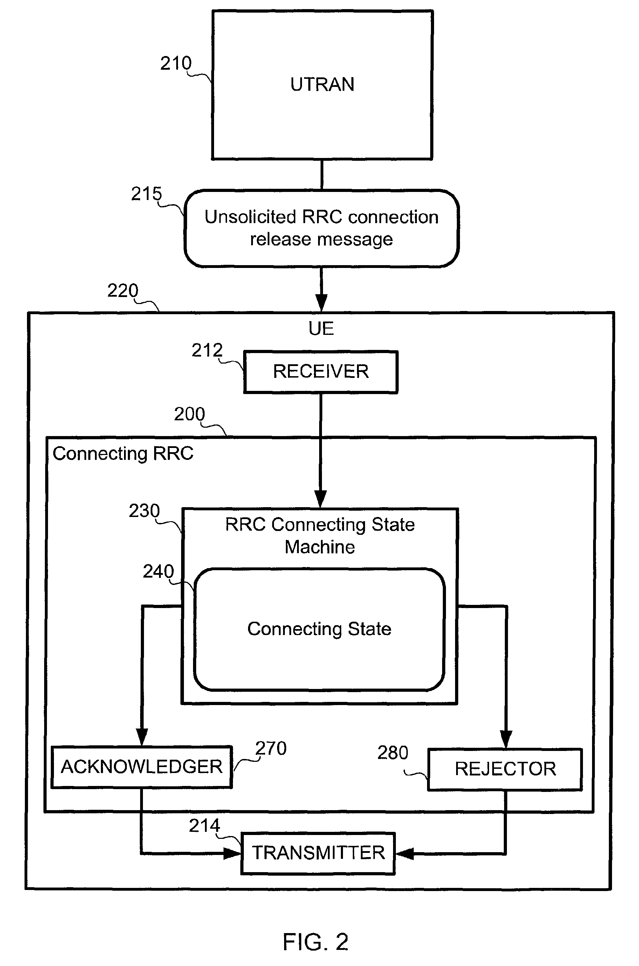

Turning now to FIG. 2, FIG. 2 is a block diagram illustrating in greater detail the Connecting RRC block of FIG. 1. UTRAN 210 sends messages with procedures that change the connection state of the UE 220, such as unsolicited RRC connection release message 215. UE 220 is provided with a receiver 212, and a transmitter 214 in order to receive message 215, and to respond to the UTRAN for those messages where a response is applicable. UE 220 is also provided with Connecting RRC block 200, which is connected to receive messages from UTRAN 210 via receiver 212, and which is connected to send responses to UTRAN 210 via transmitter 214. The connections between receiver 212 and Connecting RRC 200, and between Connecting RRC 200 and transmitter 214 may involve blocks that are not expressly shown in FIG. 2, such as for example the protocol stack blocks of FIG. 1.

The unsolicited RRC connection release handling RRC block 200, is provided with an RRC Connecting state machine 230, an acknowledger 270 and a rejector 280.

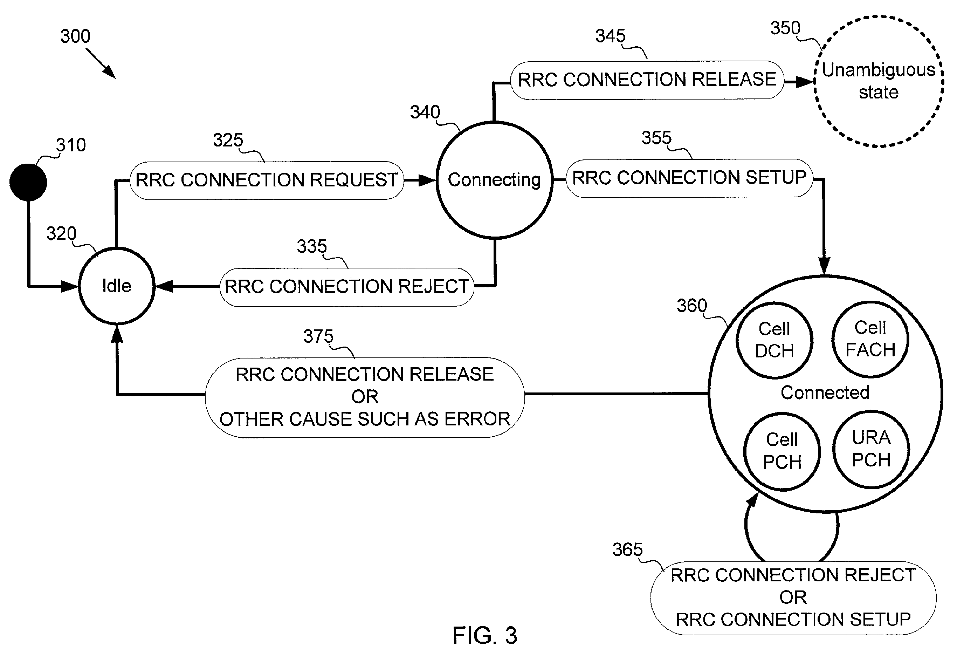

The state machine 230 is connected to the receiver 212. State machine 230 includes a Connecting state 240 capable of handling unsolicited RRC connection release 215. Various embodiments of state machine 230 and state 240 are envisaged, all of which have in common that the handling of connecting commands, such as in the example an unsolicited RRC connection release, while the state machine is in the Connecting state, which results in the state machine transitioning to an unambiguous state. The preferred embodiment of the RRC Connecting state machine will be described in reference to FIG. 3.

Advantageously, the apparatus of FIG. 2 enables the UE to handle unsolicited RRC connection release in an unambiguous manner.

Turning now to FIG. 3, FIG. 3 illustrates a preferred RRC Connecting state machine diagram, provided in accordance with the present application. The state machine diagram 300 shows exemplary state transitions of the RRC layer of the UE. It is based on the diagram shown in the ETSI specification for the RRC layer in ETSI TS 125 331, figure 7.1-1 and shows the received UTRAN messages, which cause the state transitions, but also shows an intermediate state for the UE which is the state between the UE in Idle and in Connected state, i.e. the Connecting state 340 which is not shown in the ETSI specification, as well as the Unambiguous state 350, both provided in accordance with the present application. Note that in FIG. 3, only the relevant UTRAN messages are shown for the example, and it is envisaged that other messages may be exchanged.

The state machine 300 begins at start state 310, whereat the state transitions to Idle state 320. From Idle state 320, upon reception of an RRC CONNECTION REQUEST 325 from the UTRAN, the state transitions to the Connecting 340 state provided in accordance with the present application.

The Connecting 340 state features a state transition for RRC CONNECTION RELEASE 345 such that upon reception of RRC CONNECTION RELEASE 345 the state transitions to an Unambiguous state 350. The preferred unambiguous state is the Connecting state 340 as this enables the UE to simply ignore any unsolicited RRC CONNECTION RELEASE messages while the UE is transitioning from Idle to Connected. However, it is envisaged that unambiguous state 350 can be any of the states shown in FIG. 3 specifically, any state of an RRC connection/release state machine at a UE. Upon reception of an RRC CONNECTION REJECT 335, the state transitions back to Idle 320.

From the Connecting state 340, upon reception of an RRC CONNECTION SETUP 355, the state transitions to Connected 360, which as illustrated includes various sub-states such as Cell DCH, Cell FACH, Cell PCH and URA PCH. The Connected 360 state is maintained upon reception of either an RRC CONNECTION REJECT OR RRC CONNECTION SETUP 365. However, upon reception of an RRC CONNECTION RELEASE OR OTHER CAUSE SUCH AS ERROR 375, the state transitions back to Idle 320.

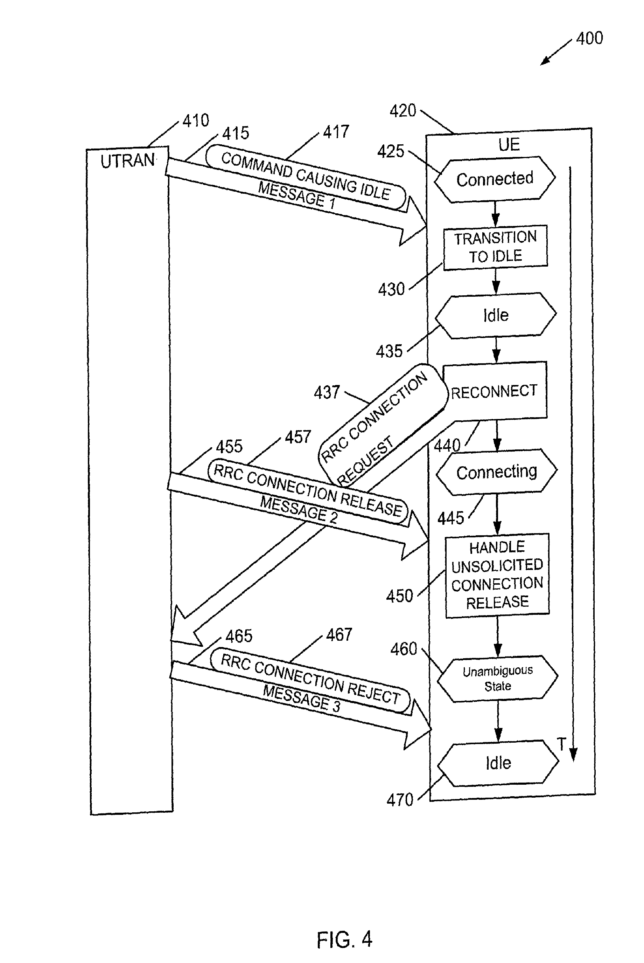

Turning now to FIG. 4, FIG. 4 is an interaction diagram illustrating RRC Connection handling, in accordance with the present application. This diagram shows a scenario in which the UTRAN message RRC CONNECTION RELEASE is unambiguously handled while the UE is transitioning from Idle state to Connected state.

Referring to FIG. 4, UE 420 was in a connected 425 state when a condition occurred which caused the UE to transition to Idle 430 so that the UE state is in Idle 435 state, but without informing the UTRAN of the change.

As illustrated, due to the reception of 'message 1' 415 containing a command causing idle 417, a transition to Idle 430 occurs and the UE is in Idle 435 state.

A first example of a command causing Idle would be complying to ETSI TS 125 331 section 8.2.2.12b where a Cell Update procedure was initiated while the security configuration was being changed.

A second example would be complying to ETSI TS 125 331 section 8.1.12.3 where a SECURITY MODE COMMAND has been received, but where the security capability defined in the message did not match the security capability of the UE.

It is not important what caused the UE to transition to Idle, but it is important that the UTRAN is unaware that this transition has taken place. Only relevant RRC states are shown so that it is envisaged that other embodiments of the state machine could include other states.

Once the UE has reached Idle 435, it may try to re-establish the connection via reconnect 440. It does this by sending out an RRC CONNECTION REQUEST 437 message, entering UCRH Connecting state 445, and waiting for either RRC CONNECTION SETUP (in which case it will move to Connected state), or RRC CONNECTION REJECT (in which case it will move back to Idle).

While the UE is in the UCRH Connecting 445 state and before the UTRAN has received the RRC CONNECTION REQUEST, the UTRAN may decide to release the connection and so issues the RRC CONNECTION RELEASE 457 via 'message 2' 455.

The UE now receives the RRC CONNECTION RELEASE message while it is trying to establish a connection, and here the behaviour is unspecified in the ETSI 3GPP specifications, but advantageously UE 420 is in in the UCRH Connecting 445 state so that it can handle unsolicited connection release 450 and transition to an unambiguous state 460 provided in accordance with the present application. The preferred unambiguous state is UCRH Connecting, so that the UE can advantageously ignore the RRC CONNECTION RELEASE. However, any state of a state machine such as the one provided in FIG. 3, or in FIG. 2 is envisaged so long as the state is unambiguous.

According to the preferred mode of operation of the present application, the UE 420 just ignores the message as the indicated connection has already been unilaterally released. Advantageously, the UE 420 can now respond correctly to the next UTRAN message, for example 'message 3' 465 having RRC CONNECTION REJECT 467 command, and the UE and UTRAN have synchronized again, i.e. continuing with the example where the Unambiguous state 460 is UCRH Connecting, the RRC CONNECTION REJECT 467 causes a transition to Idle 470. This is the preferred option for the UE to implement and allows the UE and UTRAN to return into a normal state relatively quickly. Alternative approaches are envisaged, even though they are more complex to implement and may not ensure that the system returns to a known state as quickly. It should be noted that processing by the UE of the RRC CONNECTION RELEASE 457 is not preferred, because the previous error condition has resulted in loss of the necessary signalling RBs, which may preclude it from sending the normal response. The preferred mode of operation explicitly avoids such situations, and avoiding similar handling of unsolicited RRC CONNECTION RELEASE 457 messages would be apparent to a person of ordinary skill in the art to which this application pertains in view of the present application.

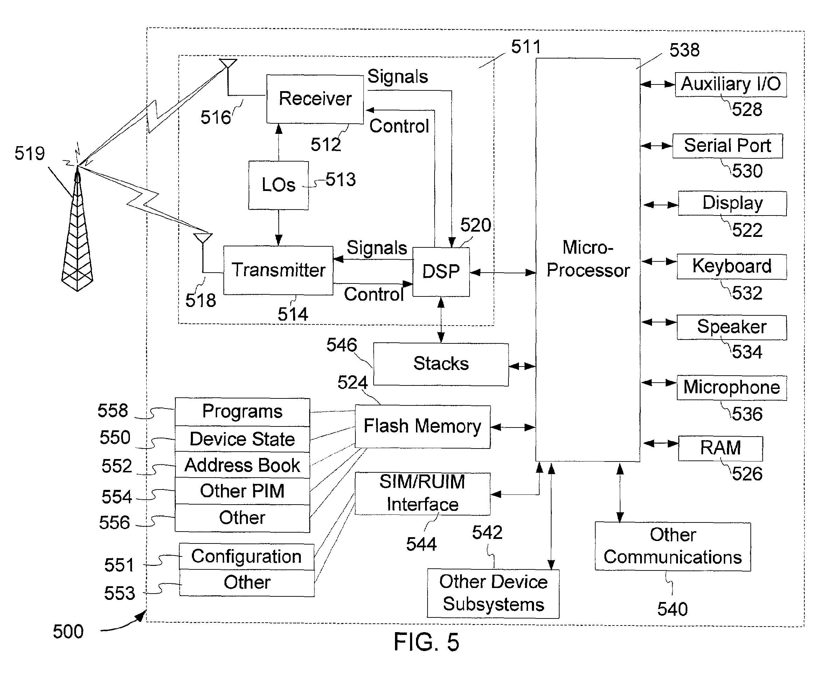

Turning now to FIG. 5, FIG. 5 is a block diagram illustrating a mobile device, which can act as a UE and co-operate with the apparatus and methods of FIGs. 1 to 4, and which is an exemplary wireless communication device. Mobile station 500 is preferably a two-way wireless communication device having at least voice and data communication capabilities. Mobile station 500 preferably has the capability to communicate with other computer systems on the Internet. Depending on the exact functionality provided, the wireless device may be referred to as a data messaging device, a two-way pager, a wireless e-mail device, a cellular telephone with data messaging capabilities, a wireless Internet appliance, or a data communication device, as examples.

Where mobile station 500 is enabled for two-way communication, it will incorporate a communication subsystem 511, including both a receiver 512 and a transmitter 514, as well as associated components such as one or more, preferably embedded or internal, antenna elements 516 and 518, local oscillators (LOs) 513, and a processing module such as a digital signal processor (DSP) 520. As will be apparent to those skilled in the field of communications, the particular design of the communication subsystem 511 will be dependent upon the communication network in which the device is intended to operate. For example, mobile station 500 may include a communication subsystem 511 designed to operate within the Mobitex™ mobile communication system, the DataTAC™ mobile communication system, GPRS network, UMTS network, EDGE network.

Network access requirements will also vary depending upon the type of network 519. For example, in the Mobitex and DataTAC networks, mobile station 500 is registered on the network using a unique identification number associated with each mobile station. In UMTS and GPRS networks, however, network access is associated with a subscriber or user of mobile station 500. A GPRS mobile station therefore requires a subscriber identity module (SIM) card in order to operate on a GPRS network. Without a valid SIM card, a GPRS mobile station will not be fully functional. Local or non-network communication functions, as well as legally required functions (if any) such as "911" emergency calling, may be available, but mobile station 500 will be unable to carry out any other functions involving communications over the network 500. The SIM interface 544 is normally similar to a card-slot into which a SIM card can be inserted and ejected like a diskette or PCMCIA card. The SIM card can have approximately 64K of memory and hold many key configuration 551, and other information 553 such as identification, and subscriber related information.

When required network registration or activation procedures have been completed, mobile station 500 may send and receive communication signals over the network 519. Signals received by antenna 516 through communication network 519 are input to receiver 512, which may perform such common receiver functions as signal amplification, frequency down conversion, filtering, channel selection and the like, and in the example system shown in FIG. 5, analog to digital (A/D) conversion. A/D conversion of a received signal allows more complex communication functions such as demodulation and decoding to be performed in the DSP 520. In a similar manner, signals to be transmitted are processed, including modulation and encoding for example, by DSP 520 and input to transmitter 514 for digital to analog conversion, frequency up conversion, filtering, amplification and transmission over the communication network 519 via antenna 518. DSP 520 not only processes communication signals, but also provides for receiver and transmitter control. For example, the gains applied to communication signals in receiver 512 and transmitter 514 may be adaptively controlled through automatic gain control algorithms implemented in DSP 520.

Mobile station 500 preferably includes a microprocessor 538 which controls the overall operation of the device. Communication functions, including at least data and voice communications, are performed through communication subsystem 511. Microprocessor 538 also interacts with further device subsystems such as the display 522, flash memory 524, random access memory (RAM) 526, auxiliary input/output (I/O) subsystems 528, serial port 530, keyboard 532, speaker 534, microphone 536, a short-range communications subsystem 540 and any other device subsystems generally designated as 542.

Some of the subsystems shown in FIG. 5 perform communication-related functions, whereas other subsystems may provide "resident" or on-device functions. Notably, some subsystems, such as keyboard 532 and display 522, for example, may be used for both communication-related functions, such as entering a text message for transmission over a communication network, and device-resident functions such as a calculator or task list.

Operating system software used by the microprocessor 538 is preferably stored in a persistent store such as flash memory 524, which may instead be a read-only memory (ROM) or similar storage element (not shown). Those skilled in the art will appreciate that the operating system, specific device applications, or parts thereof, may be temporarily loaded into a volatile memory such as RAM 526. Received communication signals may also be stored in RAM 526.

As shown, flash memory 524 can be segregated into different areas for both computer programs 558 and program data storage 550, 552, 554 and 556. These different storage types indicate that each program can allocate a portion of flash memory 524 for their own data storage requirements. Microprocessor 538, in addition to its operating system functions, preferably enables execution of software applications on the mobile station. A predetermined set of applications that control basic operations, including at least data and voice communication applications for example, will normally be installed on mobile station 500 during manufacturing. A preferred software application may be a personal information manager (PIM) application having the ability to organize and manage data items relating to the user of the mobile station such as, but not limited to, e-mail, calendar events, voice mails, appointments, and task items. Naturally, one or more memory stores would be available on the mobile station to facilitate storage of PIM data items. Such PIM application would preferably have the ability to send and receive data items, via the wireless network 519. In a preferred embodiment, the PIM data items are seamlessly integrated, synchronized and updated, via the wireless network 519, with the mobile station user's corresponding data items stored or associated with a host computer system. Further applications may also be loaded onto the mobile station 500 through the network 519, an auxiliary I/O subsystem 528, serial port 530, short-range communications subsystem 540 or any other suitable subsystem 542, and installed by a user in the RAM 526 or preferably a non-volatile store (not shown) for execution by the microprocessor 538. Such flexibility in application installation increases the functionality of the device and may provide enhanced on-device functions, communication-related functions, or both. For example, secure communication applications may enable electronic commerce functions and other such financial transactions to be performed using the mobile station 500.

In a data communication mode, a received signal such as a text message or web page download will be processed by the communication subsystem 511 and input to the microprocessor 538, which preferably further processes the received signal for output to the display 522, or alternatively to an auxiliary I/O device 528. A user of mobile station 500 may also compose data items such as email messages for example, using the keyboard 532, which is preferably a complete alphanumeric keyboard or telephone-type keypad, in conjunction with the display 522 and possibly an auxiliary I/O device 528. Such composed items may then be transmitted over a communication network through the communication subsystem 511.

For voice communications, overall operation of mobile station 500 is similar, except that received signals would preferably be output to a speaker 534 and signals for transmission would be generated by a microphone 536. Alternative voice or audio I/O subsystems, such as a voice message recording subsystem, may also be implemented on mobile station 500. Although voice or audio signal output is preferably accomplished primarily through the speaker 534, display 522 may also be used to provide an indication of the identity of a calling party, the duration of a voice call, or other voice call related information for example.

Serial port 530 in FIG. 5, would normally be implemented in a personal digital assistant (PDA)-type mobile station for which synchronization with a user's desktop computer (not shown) may be desirable, but is an optional device component. Such a port 530 would enable a user to set preferences through an external device or software application and would extend the capabilities of mobile station 500 by providing for information or software downloads to mobile station 500 other than through a wireless communication network. The alternate download path may for example be used to load an encryption key onto the device through a direct and thus reliable and trusted connection to thereby enable secure device communication.

Other communications subsystems 540, such as a short-range communications subsystem, is a further optional component which may provide for communication between mobile station 500 and different systems or devices, which need not necessarily be similar devices. For example, the subsystem 540 may include an infrared device and associated circuits and components or a Bluetooth™ communication module to provide for communication with similarly enabled systems and devices.

When mobile device 500 is used as a UE, protocol stacks 546 include an apparatus and method of handling universal terrestrial radio access network radio resource control connecting messages in universal mobile telecommunications system user equipment.

Although the terms message, procedure, and command have been specifically used in the above description and the accompanying figures, it is envisaged that either messages, commands, or procedures be handled in accordance with the apparatus and methods of the present application, so that these terms can be interchanged without changing the scope or departing from the spirit of the present application.

The above-described, embodiments of the present application are intended to be examples only. Those of skill in the art may effect alterations, modifications and variations to the particular embodiments without departing from the scope of the application.

## Claims

1. A user equipment apparatus (220) adapted to exchange messages with a UTRAN (210), select messages having a command, select commands including RRC CONNECTION REQUEST, RRC CONNECTION SETUP, RRC CONNECTION REJECT, and RRC CONNECTION RELEASE, the apparatus comprising a connecting state machine (300) transitioning from one state to another upon exchange of the select commands, the connecting state machine comprising:
an Idle state (320) whereat the user equipment remains before transmitting an RRC CONNECTION REQUEST (325);
a Connected (360) state whereat the user equipment remains upon reception of one of RRC CONNECTION REJECT and RRC CONNECTION SETUP (365), and whereat the state transitions to said Idle state upon one of the reception of RRC CONNECTION RELEASE, an error at the user equipment, and other events which cause a transition to said Idle state (375) ; and
a Connecting state (340) whereat a connecting command is handled by the state machine while the state machine is transitioning between said Idle state and said Connected state, said Connecting state transitioning to an unambiguous state (350) upon exchange of the connecting command.

2. The user equipment as recited in claim 1, wherein the unambiguous state is said Connecting state thereby enabling the user equipment to handle the connecting command by simply ignoring it.

3. The user equipment as recited in claim 1, wherein the unambiguous state is said Idle state thereby enabling the user equipment to handle the connecting command by rejecting it.

4. The user equipment as recited in claim 1, wherein the unambiguous state is said Connected state thereby enabling the user equipment to handle the connecting command by setting up a connection.

5. The user equipment as recited in claim 1, wherein the connecting command is unsolicited.

6. The user equipment as recited in claim 5, wherein the unsolicited connecting command is an RRC CONNECTION RELEASE command (345).

7. The user equipment as recited in claim 1, wherein the connecting command is an RRC CONNECTION REJECT command (335).

8. The user equipment as recited in claim 1, wherein the connecting command is an RRC CONNECTION SETUP command (355).

9. A method of handling a message received at a user equipment, the message sent from a UTRAN, the method comprising the steps of:
(a) determining if no procedure is ongoing at the user equipment which expects the message to be received;
(b) determining if the message is of an unsolicited type, the unsolicited types including RRC CONNECTION RELEASE; and
(c) if the determinations in steps (a) and (b) are both affirmative, ignoring the received message.

10. The method as recited in claim 9, wherein the received message is addressed to the user equipment on the CCCH.
